# EUROPÄISCHE PATENTANMELDUNG

(11) **EP 2 216 509 A1**
(43) Veröffentlichungstag der Anmeldung: **11.08.2010**
(21) Anmeldenummer: 09001524.9
(22) Anmeldetag: 04.02.2009
(51) Int. Cl.: F01D 5/28, B23P 15/04, F23R 3/06

(54) **Turbinenbauteil mit leicht entfernbarer Schutzschicht, Satz von Turbinenbauteilen, eine Turbine und ein Verfahren zum Schützen eines Turbinenbauteils**

(71) Anmelder: SIEMENS AKTIENGESELLSCHAFT, 80333 München (DE)
(72) Erfinder: Beyer, Roman, Dr., 10715 Berlin (DE); Bublath, Boris, 13581 Berlin (DE); Just, Ingo, 15834 Rangsdorf (DE); Podgorski, Thomas, 16515 Oranienburg OT Lehntiz (DE)

(57) **Zusammenfassung**

Turbinenbauteile (120, 130) werden auch oft einzeln verschickt und nicht in einer Turbine zusammengebaut verschickt.
Dabei muss die Turbinenschaufel vor äußeren Belastungen und äußeren Beschädigungen geschützt werden.

Dies geschieht durch eine leicht entfernbare Schutzbeschichtung (10), die während des ersten Betriebs des neuhergestellten oder wiederhergestellten Bauteils (120, 130) sich leicht verflüchtigt, so dass Schutzbeschichtung (10) nicht in einem extra Verfahrensschritt vor dem Einbau entfernt werden muss.

## Beschreibung

Die Erfindung betrifft ein Turbinenbauteil mit einer leicht entfernenden Schutzbeschichtung, einen Satz von Turbinenbauteilen, eine Turbine und ein Verfahren zum Schützen eines Bauteils.

Turbinenschaufeln werden oft zum Schutz gegen Oxidation bzw. Korrosion und gegen zu hohen Wärmeeintrag oft mit metallischen oder keramischen Schutzschichten versehen und werden entweder in eine Turbine eingebaut oder werden im Zweifelsfall einzeln oder mehrfach verschickt, um sie in einer Anlage vor Ort wieder neu einbauen zu können.

Ebenso weisen Turbinenschaufeln Filmkühllöcher auf, die notwendig sind, da durch die Kühlung eine höhere Einsatztemperatur der Turbinenschaufel möglich ist.

Beim Transport kann es passieren, dass die keramische Schicht einen Kratzer erfährt, der als Rissursprung dienen kann, wenn eine thermische Beanspruchung anliegt. Ebenso können die Filmkühllöcher können durch Schmutz verstopfen und den Austritt von Kühlluft im Einsatz verhindern.

Es ist daher Aufgabe der Erfindung oben genannte Probleme zu lösen.

Die Erfindung wird gelöst durch ein Turbinenbauteil mit einer leicht entfernbare Schicht gemäß Anspruch 1, Turbinenteile nach Anspruch 11, durch ein Satz von Turbinenbauteil gemäß Anspruch 12, durch eine Turbine gemäß Anspruch 13 und durch ein Verfahren gemäß Anspruch 14.

In den Unteransprüchen sind weitere vorteilhafte Maßnahmen aufgelistet, die beliebig miteinander kombiniert werden können, um weitere Vorteile zu erzielen.

### Es zeigen:

- Figur 1, 2, 3, 4: Ausführungsbeispiele einer Turbinenschaufel,
- Figur 5: eine Gasturbine,
- Figur 6: eine Turbinenschaufel und
- Figur 7: eine Brennkammer,
- Figur 8: eine Liste von Superlegierungen.

Die in Figuren und in der Beschreibung aufgelisteten Beispiele stellen nur Ausführungsbeispiele der Erfindung dar.

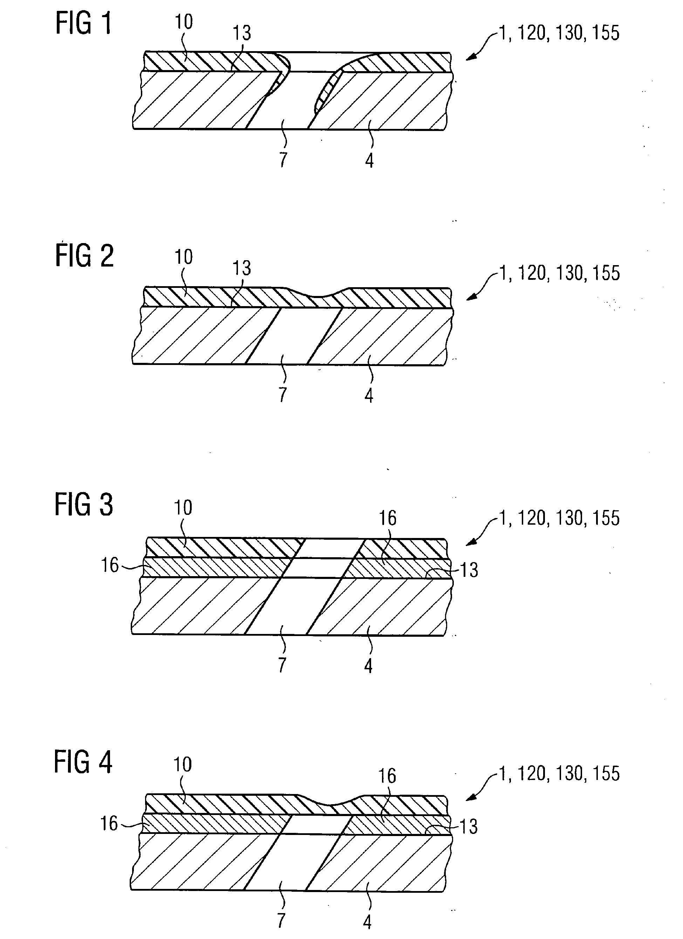

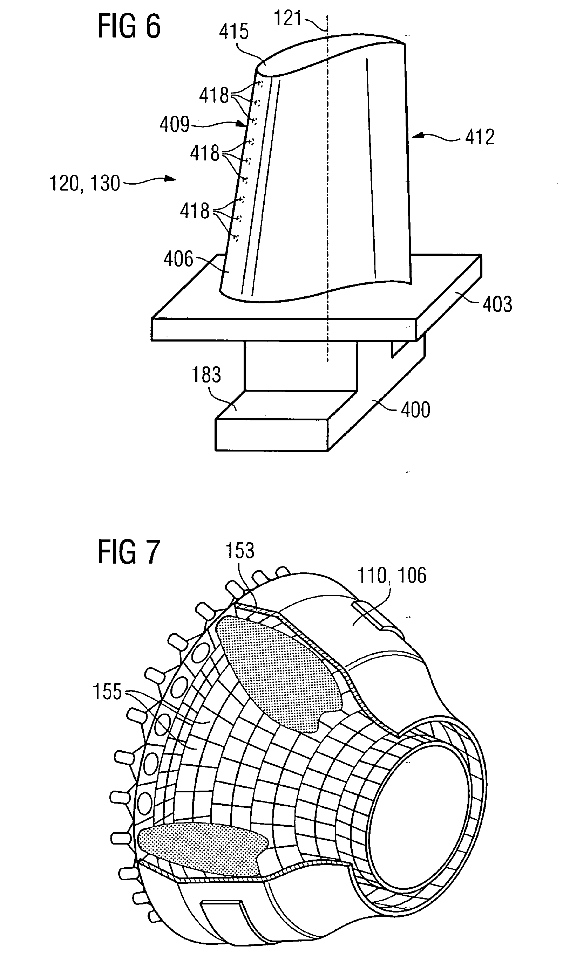

Figur 1 zeigt ein Turbinenbauteil 1, 120, 130, 155 mit einem äußeren Loch 7, das an eine äußere Oberfläche 13 eines Substrats 4 angrenzt. Die Erfindung ist nicht beschränkt auf Turbinenbauteile.
Ein äußeres Loch 7 bedeutet ein Loch in einer äußeren Wand eines hohlen Turbinenbauteil 1, 120, 130, 155.
Das Loch 7 ist vorzugsweise ein durchgehendes Loch 7, also ein Filmkühlloch im Falle einer Turbinenschaufel 120, 130 (Fig. 6) oder eines Brennkammerelements 155 (Fig. 7).

Das Teil, das mit dem Bezugszeichen 4 gekennzeichnet ist, ist das Substrat 4 aus einer Superlegierung (Fig. 8) und weist vorzugsweise auch metallische und/oder keramische Schutzbeschichtungen 16 (Fig. 3, 4) auf, die in Figur 1, 2 nicht näher im Detail dargestellt sind.

Das Turbinenbauteil 1, 120, 130, 155 wird bei hohen Einsatztemperaturen, mindestens 700°C, insbesondere mindestens 850°C eingesetzt.

Auf der Oberfläche 13 des Substrats 4 oder der metallischen Beschichtung 16 (MCrAlY-Beschichtung) oder der keramischen Beschichtung 16 ist eine letzte, weitere, äußerste Schicht 10 aufgebracht.

Die äußerste Beschichtung 10 ist bei Entfernungstemperaturen deutlich niedriger als der Einsatztemperatur des Bauteils 1, 120, 130, 155 leicht entfernbar und besteht vorzugsweise aus einem organischen Material, insbesondere aus einem Kunststoff.

Die hochtemperaturbeständigen Kunststoffe sind aus dem Stand der Technik bekannt, ebenso wie die Beschichtung des Bauteils 1, 120, 130, 155 mit dem Kunststoff. Als Kunststoffe kommen Polyamide (Aurum), PEEK oder PEK (Polyetheretone) in Betracht.

Vorzugsweise kann die Schutzbeschichtung 10 zumindest einen, insbesondere nur einen Farbstoff (vorzugsweise anorganisches Material) enthalten.

Die Beschichtung 10 kann das Filmkühlloch 7 vorzugsweise offenlassen (Fig.1, 3) oder vorzugsweise auch die Öffnung teilweise, größtenteils oder ganz verdecken, wie es in Figur 2, 4 dargestellt ist.
Auch bei einer Einengung des Lochs 7 kann verhindert werden, dass grobe Staubpartikel weiter in das Loch 7 eindringen können.

Das Bauteil 1, 120, 130, 155 wird in eine Vorrichtung, vorzugsweise eine Gasturbine 100 eingebaut, wobei die Beschichtung 10 noch auf den Bauteil 120, 130, 155 gemäß Figur 1, 2, 3 oder Figur 4 vorhanden ist.

Durch die bei der Inbetriebnahme (vorzugsweise Start, Testbetrieb, ...) gegenüber den maximalen Einsatztemperaturen der Gasturbine 100 niedrigere Entfernungstemperatur wird bei dem niedrigeren Entfernungstemperaturen die Schutzbeschichtung 10 thermisch entfernt bzw. verflüchtigt sich durch Verdampfen und Verbrennen oder ähnlichen chemischen Prozesses und setzt dann das Filmkühlloch 7 frei bzw. entfernt sich von der Oberfläche des Bauteils 1, 120, 130, 155. Bei der ersten Benutzung mit dem neu eingebauten Bauteil 1, 120, 130 ist Anfangs noch nicht eine Kühlung erforderlich, so dass das Kühlloch 7 durchaus noch durch die Schutzbeschichtung 10 bedeckt sein kann.

Die Einsatztemperatur für eine Gasturbine 100 beträgt ≥ 800°C, insbesondere ≥ 1000°C. Die Schutzschicht 10 verdampft, verbrennt oder sublimiert innerhalb der Turbine 100, vorzugsweise mindestens bei 100°C, insbesondere ≥ 200°C, insbesondere bei mindestens 300°C.

Der Unterschied zwischen diesen beiden Temperaturen (Einsatztemperatur und Entfernungstemperatur der Schicht 10) beträgt vorzugsweise mindestens 500°C.

Wenn das Loch 7 durch die Schicht 10 bedeckt (Fig. 2, 4) oder verengt (Fig. 1) ist, kann kein Schmutz in das Loch 7 eindringen und es zeitweise oder dauerhaft verstopfen oder beengen (Transportschutz).

Wenn die Farbe der Schicht 10 an einer Stelle anders ist, so ist dies ein Hinweis auf eine mögliche Beschädigung und das Bauteil 120, 130, 155 kann an dieser Stelle überprüft werden.

Die Turbinenschaufeln 120, 130 der ersten Stufe der Turbine 100 können vorzugsweise zur besseren Unterscheidung eine andere Farbe aufweisen als die Turbinenschaufeln 120, 130 der zweiten Stufe der Turbine 100.
Ebenso können wieder aufgearbeitete und neue Turbinenschaufeln 120, 130, vorzugsweise derselben Turbinenstufe, unterschiedliche Farben aufweisen.
Ebenso können Lauf- und Leitschaufeln 120, 130 einer Turbinenstufe einer Turbine 100 verschiedene Farben aufweisen.

Ebenso können Lauf- und Leitschaufeln einer Turbinenstufe aber von verschiedenen Turbinen 100 oder Turbinentypen verschiedene Farben aufweisen.
Die Farbe muss nicht monochrom sein.

Schutzbeschichtungen 10 können auch bei Dampfturbinen aufgebracht werden.

Die Figur 3 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10A1-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10A1-0,4Y-1,5Re.

Auf der MCrAlX kann noch eine Wärmedämmschicht vorhanden sein, die vorzugsweise die äußerste Schicht ist, und besteht beispielsweise aus ZrO₂ Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht.

Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

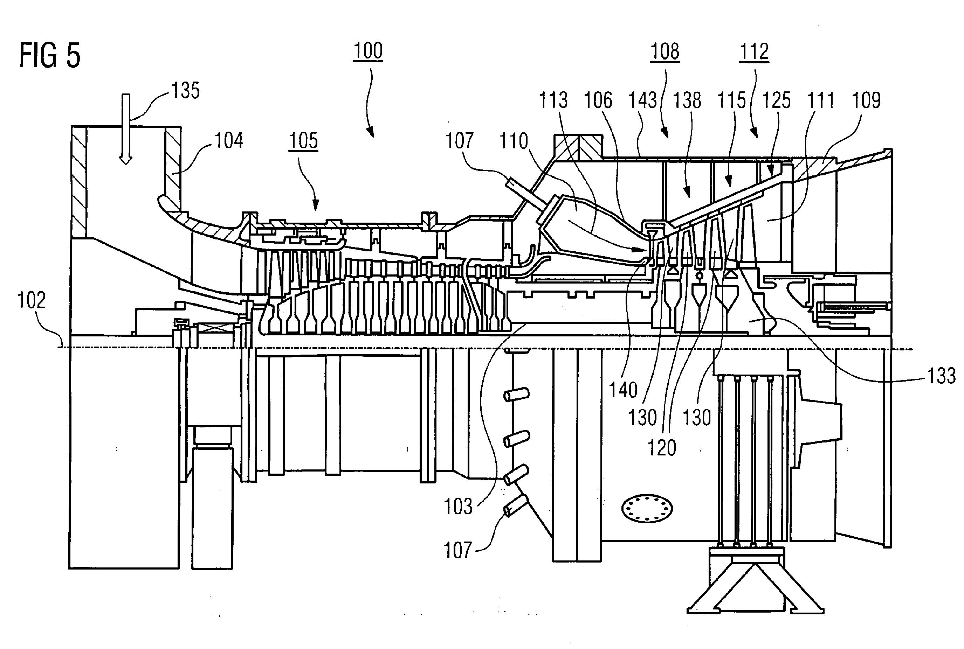

Die Figur 5 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

## Patentansprüche

1. Turbinenbauteil (1, 120, 130, 155) mit zumindest einem äußeren Loch (7),
das (1, 120, 130, 155) bei hohen Einsatztemperaturen verwendet wird,
das (1, 120, 130, 155) als äußerste Schicht eine Schutzbeschichtung (10) aufweist,
die (10) im Vergleich zu den hohen Einsatztemperaturen des Turbinenbauteils (1, 120, 130, 155) bei niedrigeren Entfernungstemperaturen durch Wärmeeinwirkung leicht entfernbar ist.

2. Turbinenbauteil nach Anspruch 1,
bei dem das Loch (7) ein Durchgangsloch darstellt.

3. Turbinenbauteil nach Anspruch 1 oder 2,
bei dem die Schutzbeschichtung (10) auch die Öffnung des zumindest einen Lochs (7) zumindest teilweise bedeckt, insbesondere größtenteils bedeckt, ganz insbesondere ganz bedeckt.

4. Turbinenbauteil nach Anspruch 1, 2 oder 3,
bei dem die Schutzbeschichtung (10) im Loch (7) angeordnet ist.

5. Turbinenbauteil nach Anspruch 1, 2, 3 oder 4,
bei dem das Loch (7) mit der Schutzbeschichtung (10) durchgängig ist.

6. Turbinenbauteil nach Anspruch 1, 2, 3, 4 oder 5,
bei dem die Schutzbeschichtung (10) auf einer keramischen Beschichtung (16) vorhanden ist.

7. Turbinenbauteil nach Anspruch 1, 2, 3, 4, 5 oder 6, bei dem die Schutzbeschichtung (10) zumindest einen
Farbstoff,
insbesondere nur einen Farbstoff,
aufweist.

8. Turbinenschaufel nach Anspruch 1, 2, 3, 4, 5, 6 oder 7, bei dem die Entfernungstemperatur mindestens 100°C, insbesondere mindestens 200°C beträgt.

9. Turbinenbauteil nach Anspruch 1, 2, 3, 4, 5, 6, 7 oder
8,
bei dem die Schutzbeschichtung (10) ein Polymer
aufweist,
insbesondere daraus besteht.

10. Turbinenbauteil nach Anspruch 1, 2, 3, 4, 5, 6, 7, 8 oder 9,
bei dem der Unterschied zwischen der Einsatztemperatur des Turbinenbauteils (120, 130, 155) und der Entfernungstemperatur,
ab der sich die Schutzbeschichtung (10) entfernt, mindestens 400°C,
insbesondere mindestens 500°C
beträgt.

11. Turbinenbauteile (120, 130) nach Anspruch 1, 2, 3, 4, 5, 6, 7, 8, 9 oder 10,
wobei ein Teil der Turbinebauteile (120, 130) eine andere Farbe aufweist als der restliche Teil der Turbinenbauteile (120, 130).

12. Satz von Turbinenteilen (120, 130) nach Anspruch 1, 2, 3, 4, 5, 6, 7, 8, 9 oder 10,
wobei ein Teil der Turbinebauteile (120, 130) einer Turbine (100) eine andere Farbe aufweist als der restliche Teil der Turbinenbauteile (120, 130) derselben Turbine (100) oder desselben Turbinentyps.

13. Turbine (100) mit Turbinenbauteilen (120, 130, 155) nach Anspruch 1, 2, 3, 4, 5, 6, 7, 8, 9, 10, 11 oder 12.

14. Verfahren zum Schützen eines Turbinenbauteils (1, 120,
130, 155),
insbesondere nach Anspruch 1, 2, 3, 4, 5, 6, 7, 8, 9, 10, 11 oder 12,
bei dem vor dem Einbau des Turbinenbauteils (120, 130, 155) in eine Turbine (100),
insbesondere in eine Turbine (100) nach Anspruch 13, die Schutzbeschichtung (10) auf das Bauteil (1, 120, 130, 155) als äußerste Schicht aufgebracht wird und dass das zumindest eine Bauteil (1, 120, 130, 155) mit der Schutzbeschichtung (10) in die Turbine (100) eingebaut wird,
wobei während der ersten Inbetriebnahme der Turbine (100) mit dem neu eingebauten oder bereits eingebauten Bauteil (1, 120, 130, 155) sich die Beschichtung (10) durch Wärmeeinwirkung aufgrund der Inbetriebnahme sich zumindest teilweise, insbesondere vollständig innerhalb der Turbine (100) entfernt,
insbesondere sich verflüchtigt.

15. Verfahren nach Anspruch 13,
bei dem die Schutzbeschichtung (10) auf eine keramische Schicht (16) aufgebracht wird.

16. Verfahren nach Anspruch 13, 14 oder 15,
bei dem die Schutzbeschichtung (10) ab einer Temperatur von 300°C,
insbesondere ab 500°C nicht mehr vorhanden ist.
